# EUROPÄISCHE PATENTSCHRIFT

(11) **EP 4 176 545 B1**
(45) Veröffentlichungstag und Bekanntmachung des Hinweises auf die Patenterteilung: **28.08.2024**
(21) Anmeldenummer: 21739611.8
(22) Anmeldetag: 30.06.2021
(51) Int. Cl.: H04L 67/12, H04L 67/51

(54) **VERFAHREN UND SYSTEM ZUR BEREITSTELLUNG VON ZEITKRITISCHEN DIENSTEN**
METHOD AND SYSTEM FOR PROVIDING TIME-CRITICAL SERVICES
PROCÉDÉ ET SYSTÈME DE FOURNITURE DES PRESTATIONS À DURÉE CRITIQUE

(30) Priorität: 31.08.2020 EP 20193690
(43) Veröffentlichungstag der Anmeldung: 10.05.2023
(73) Patentinhaber: Siemens Aktiengesellschaft, 80333 München (DE)
(72) Erfinder: ALBRECHT, Harald, 90475 Nürnberg (DE); HÖME, Stephan, 91126 Schwabach (DE); TALANIS, Thomas, 91336 Heroldsbach (DE)
(74) Vertreter: Siemens Patent Attorneys
(86) Internationale Anmeldenummer: PCT/EP2021/068060
(87) Internationale Veröffentlichungsnummer: WO 2022/042905

(56) Entgegenhaltungen:
- DE-A1- 10 229 877
- US-A1- 2009 119 664

## Beschreibung

Die vorliegende Erfindung betrifft ein Verfahren sowie ein System zur Bereitstellung von zeitkritischen Diensten, insbesondere in einem industriellen Automatisierungssystem.

Industrielle Automatisierungssysteme umfassen üblicherweise eine Vielzahl von über ein industrielles Kommunikationsnetz miteinander vernetzten Automatisierungsgeräten und dienen im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echtzeit-Kommunikationsprotokolle, wie PROFINET, PROFIBUS, Real-Time-Ethernet oder Time-Sensitive Networking (TSN), verwendet. Insbesondere können Steuerungsdienste bzw. -anwendungen automatisiert und auslastungsabhängig auf aktuell verfügbare Server oder virtuelle Maschinen eines industriellen Automatisierungssystems verteilt werden.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Außerdem können nicht oder nicht vollständig übermittelte Nachrichten beispielsweise einen Übergang oder Verbleib eines industriellen Automatisierungssystems in einen sicheren Betriebszustand verhindern.

In Ethernet-basierten Kommunikationsnetzen können Probleme entstehen, wenn Netzressourcen für eine Übermittlung von Datenströmen oder von Datenrahmen mit Echtzeitanforderungen konkurrierend für eine Übermittlung von Datenrahmen mit gro-ßem Nutzdateninhalt ohne spezielle Dienstgüteanforderungen beansprucht werden. Dies kann schließlich dazu führen, dass Datenströme oder Datenrahmen mit Echtzeitanforderungen nicht entsprechend einer angeforderten bzw. benötigten Dienstgüte übermittelt werden.

Aus WO 2020/249345 A1 ist ein Verfahren zur Bereitstellung von Steuerungsanwendungen bekannt, bei dem Kommunikationsnetzadressen von Ablaufsteuerungskomponenten, die Steuerungsanwendungen bereitstellen, sowie Identifikatoren der Ablaufsteuerungskomponenten oder von Server-Einrichtungen, auf denen die Ablaufsteuerungskomponenten ausgeführt werden, von einer Überwachungseinrichtung abfragt werden. Aus den abgefragten Kommunikationsnetzadressen und Identifikatoren sowie aus Bezeichnungen der Steuerungsanwendungen erzeugt eine Konfigurationssteuerungseinrichtung Konfigurationsinformationen für eine Weiterleitungseinrichtung. Die Weiterleitungseinrichtung nimmt Anfragen von Endgeräten zur Nutzung der Steuerungsanwendungen entgegen und leitet diese entsprechend den Konfigurationsinformationen an eine jeweilige Ablaufsteuerungskomponente weiter.

In EP 3 715 986 B1 ist ein Verfahren zur automatischen Konfiguration eines Automatisierungsgeräts beschrieben, bei dem eine Geräte-Management-Einheit überwacht, ob dem Automatisierungsgerät ein Automatisierungssystem-Kenner zugeordnet wird. Wenn die Geräte-Management-Einheit eine solche Zuordnung erkannt hat, fragt sie bei einer zentralen Management-Einheit eines Clusters an, ob in einer Cluster-Zustands-Datenbank mit Beschreibungsobjekten für zumindest einen Knoten des Clusters bereits ein Beschreibungsobjekt existiert, in dem der dem Automatisierungsgerät zugeordnete Automatisierungssystem-Kenner hinterlegt ist. Falls ein solches Beschreibungsobjekt nicht existiert, oder falls ein solches Beschreibungsobjekt existiert, dieses jedoch als inaktiv deklariert ist, erzeugt die Geräte-Management-Einheit in der Cluster-Zustands-Datenbank für einen dem Automatisierungsgerät zugeordneten Knoten-Kenner ein Beschreibungsobjekt, in dem der dem Automatisierungsgerät zugeordnete Automatisierungs-Kenner hinterlegt ist.

US8127291B2 betrifft ein Verfahren zur Bereitstellung von zeitkritischen Diensten, bei dem die Dienste jeweils zumindest eine Server-Komponente umfassen. Zusätzlich umfassen die Dienste jeweils eine Verzeichnisdienst-Komponente zur Ermittlung innerhalb einer Ablaufsteuerungsumgebung bereitgestellter Dienste. Dabei werden die Verzeichnisdienst-Komponenten miteinander über eine Kommunikationsschnittstelle verbunden. Mit einer separierten Kommunikationsschnittstelle ist eine Aggregator-Komponente verbunden, die Angaben über die mittels der Server-Komponenten bereitgestellten Dienste außerhalb der Ablaufsteuerungsumgebung verfügbar macht. Die Verzeichnisdienst-Komponenten gleichen untereinander bzw. mit der Aggregator-Komponente Angaben über jeweils ermittelte Dienste ab. Die Aggregator-Komponente stellt die abgeglichenen Angaben außerhalb der Ablaufsteuerungsumgebung bereit.

Aus DE 10 229 877 A1 ist ein Verzeichnisdienst bekannt, welcher die Bereitstellung von Informationen innerhalb eines Automatisierungssystems vereinfacht. Der Verzeichnisdienst dient zur Bereitstellung von Informationen über Zugriffsmöglichkeiten, Funktionalitäten, Schnittstellen und Topologien von Komponenten des Automatisierungssystems und ist WebService-basiert.

Bestehende Diensterkennungsverfahren (service/device discovery), insbesondere für OPC UA, sind primär auf eine Ermittlung von Diensten ausgelegt, die mittels physikalischer oder virtueller, Hypervisor-basierte Maschinen zur Nutzung verfügbar gemacht werden. Insbesondere relativ hohe Betriebs- und Wartungskosten für Hypervisor-basierte virtuelle Maschinen machen Virtualisierungskonzepte mit geringerem Ressourcenbedarf, z.B. Containervirtualisierung, gegenüber zu einer vollständigen Systemvirtualisierung zunehmend attraktiv. Dies gilt auch für industrielle Automatisierungssysteme.

Entsprechend OPC UA-Spezifikationen sind zwar Local Discovery Server (LDS) für OPC-UA basierte Dienste vorgesehen. Allerdings können mittels entsprechender Erkennungsverfahren lediglich jeweils Hosts innerhalb einer Broadcast-Domäne aufgefunden werden. Außerdem wird eine Multicast-Kommunikation innerhalb von Systemen zur Containervirtualisierung üblicherweise blockiert.

Der vorliegenden Erfindung liegt die Aufgabe zugrunde, ein Verfahren zur Bereitstellung von zeitkritischen Diensten zu schaffen, das eine zuverlässige nutzerseitige Ermittlung von mittels Containervirtualisierung oder vergleichbarer Virtualisierungskonzepte bereitgestellten Diensten ermöglicht, sowie eine geeignete Vorrichtung zur Durchführung des Verfahrens anzugeben.

Diese Aufgabe wird erfindungsgemäß durch ein Verfahren mit den in Anspruch 1 angegebenen Merkmalen und durch ein System mit den in Anspruch 10 angegebenen Merkmalen gelöst. Vorteilhafte Weiterbildungen sind in den abhängigen Ansprüchen angegeben.

Entsprechend dem erfindungsgemäßen Verfahren zur Bereitstellung von zeitkritischen Diensten umfassen die Dienste jeweils zumindest eine Server-Komponente, die durch einen Software-Container gebildet wird, der von anderen Software-Containern oder Container-Gruppen isoliert innerhalb einer Ablaufsteuerungsumgebung auf einem Host-Betriebssystem einer Server-Einrichtung abläuft. Die Ablaufsteuerungsumgebung umfasst einen virtuellen Switch, und die Software-Container nutzen jeweils gemeinsam mit anderen auf der jeweiligen Server-Einrichtung ablaufenden Software-Containern einen Kernel des Host-Betriebssystems der Server-Einrichtung. Für die Server-Komponenten wird jeweils ein virtueller IP-Stack verfügbar gemacht, der mit dem virtuellen Switch verbunden ist.

Die Ablaufsteuerungsumgebung kann beispielsweise eine Docker Engine umfassen, die auf einer Server-Einrichtung abläuft. Speicherabbilder für die Software-Container können beispielsweise aus einem durch eine Vielzahl von Nutzern lesend bzw. schreibend zugreifbaren Speicher- und Bereitstellungssystem abgerufen werden.

Erfindungsgemäß umfassen die Dienste zusätzlich jeweils eine mittels eines separaten, in der Ablaufsteuerungsumgebung ablaufenden Software-Containers gebildete Verzeichnisdienst-Komponente zur Ermittlung innerhalb der Ablaufsteuerungsumgebung bereitgestellter Dienste. Die Verzeichnisdienst-Komponenten werden miteinander über eine Kommunikationsschnittstelle verbunden, die von dem virtuellen Switch und den virtuellen IP-Stacks der Server-Komponenten separiert ist und einen Seitenkanal zu einer Kommunikation der Server-Komponenten mit der Ablaufsteuerungsumgebung bildet.

Darüber hinaus ist mit der separierten Kommunikationsschnittstelle erfindungsgemäß eine mittels eines weiteren, in der Ablaufsteuerungsumgebung ablaufenden Software-Containers gebildete Aggregator-Komponente verbunden, die Angaben über die mittels der Server-Komponenten bereitgestellten Dienste außerhalb der Ablaufsteuerungsumgebung verfügbar macht. Für die Aggregator-Komponente wird hierzu ein virtueller IP-Stack verfügbar gemacht, der mit dem virtuellen IP-Switch verbunden ist. Die Verzeichnisdienst-Komponenten gleichen untereinander bzw. mit der Aggregator-Komponente Angaben über jeweils ermittelte Dienste ab. Die Aggregator-Komponente stellt die abgeglichenen Angaben außerhalb der Ablaufsteuerungsumgebung bereit. Vorzugsweise werden mittels der Server-Komponenten Dienste bzw. Funktionen eines industriellen Automatisierungssystems bereitgestellt. Dabei können die Dienste jeweils mehrere gleichartige oder identische Server-Komponenten umfassen, die jeweils durch unterschiedliche Server-Einrichtungen bereitgestellt werden.

Die vorliegende Erfindung ermöglicht insbesondere eine Installation und Ausführung mehrerer mittels Ablaufsteuerungskomponenten bereitgestellter Anwendungen gleichzeitig, ohne dass für eine durch Nutzer der Anwendungen initiierte Diensterkennung Konfigurationsarbeiten oder Anpassungen an den Anwendungen erforderlich sind. Damit ergibt sich für Anbieter entsprechender Anwendungen, insbesondere OPC UA Server-Funktionen, eine starke Reduktion ihrer Aufwände für eine Systemintegration, so dass Anwendungen schnell und kostengünstig bereitgestellt werden können.

Die Verzeichnisdienst-Komponenten werden vorteilhafterweise jeweils erzeugt, wenn innerhalb für den jeweiligen Dienst erstmals eine Server-Komponente gestartet wird. Darüber hinaus können die Verzeichnisdienst-Komponenten beispielsweise jeweils mittels einer bidirektionalen Kommunikationsverbindung für eine Inter-Prozess-Kommunikation innerhalb einer Datenverarbeitungseinrichtung oder mittels einer separaten Transportschicht-Verbindung miteinander bzw. mit einem der Aggregator-Komponente zugeordneten Verzeichnisdienst-Client verbunden werden. Auf dieser Grundlage können die Verzeichnisdienst-Komponenten untereinander bzw. mit dem Verzeichnisdienst-Client Angaben über jeweils ermittelte Dienste abgleichen. Ein Abgleich der ermittelten Dienste zwischen den Verzeichnisdienst-Komponenten bzw. mit dem Verzeichnisdienst-Client kann zyklisch mittels Polling oder ereignisgesteuert erfolgen. Entsprechend einer weiteren vorteilhaften Ausgestaltung der vorliegenden Erfindung umfasst die separierte Kommunikationsschnittstelle die bidirektionalen Kommunikationsverbindungen für die Inter-Prozess-Kommunikation bzw. die Transportschicht-Verbindungen.

Entsprechend obigen Ausführungen wird die Ablaufsteuerungsumgebung erfindungsgemäß mittels einer Server-Einrichtung bereitgestellt. Dabei können die Software-Container jeweils von der Server-Einrichtung auf eine andere Server-Einrichtung zur dortigen Ausführung migriert bzw. auf anderen Server-Einrichtungen zeitgleich ausgeführt werden. Vorzugsweise erfasst eine mehreren Server-Einrichtungen zugeordnete Überwachungseinrichtung ein Anlegen, ein Löschen bzw. eine Änderung der Software-Container. Dabei umfasst das Anlegen, das Löschen bzw. die Änderung der Software-Container jeweils ein Allokieren oder Freigeben von Ressourcen in der jeweiligen Server-Einrichtung. Darüber hinaus registriert die Überwachungseinrichtung die Dienste mit ihrem jeweiligen Ausführungsstatus. Auf diese Weise können insbesondere voneinander abhängige Dienste zuverlässig orchestriert werden.
- Das erfindungsgemäße System zur Bereitstellung von zeitkritischen Diensten ist zur Durchführung eines Verfahrens entsprechend vorangehenden Ausführungen vorgesehen und umfasst eine Ablaufsteuerungsumgebung, einen von der Ablaufsteuerungsumgebung umfassten virtuellen Switch sowie mehrere, jeweils von einem Dienst umfasste Server-Komponenten. Die Server-Komponenten sind jeweils durch einen Software-Container gebildet, der dafür ausgestaltet und eingerichtet ist, von anderen Software-Containern oder Container-Gruppen isoliert innerhalb einer Ablaufsteuerungsumgebung auf einem Host-Betriebssystem einer Server-Einrichtung abzulaufen und gemeinsam mit anderen auf der Server-Einrichtung ablaufenden Software-Containern einen Kernel des Host-Betriebssystems zu nutzen. Dabei verfügen die Server-Komponenten jeweils über einen virtuellen IP-Stack, der mit dem virtuellen Switch verbunden ist. Außerdem ist eine Kommunikationsschnittstelle vorgesehen, die von dem virtuellen Switch und den virtuellen IP-Stacks der Server-Komponenten separiert ist und einen Seitenkanal zu einer Kommunikation der Server-Komponenten mit der Ablaufsteuerungsumgebung bildet.

Darüber hinaus umfasst das erfindungsgemäße System mehrere, jeweils zusätzlich von einem Dienst umfasste Verzeichnisdienst-Komponenten zur Ermittlung mittels der Ablaufsteuerungsumgebung bereitgestellter Dienste. Die Verzeichnisdienst-Komponenten sind jeweils mittels eines separaten, in der Ablaufsteuerungsumgebung ablaufenden Software-Containers gebildet. Ferner sind die Verzeichnisdienst-Komponenten miteinander über die Kommunikationsschnittstelle verbunden, die von dem virtuellen Switch und den virtuellen IP-Stacks der Server-Komponenten separiert ist und den Seitenkanal zu der Kommunikation der Server-Komponenten mit der Ablaufsteuerungsumgebung bildet.

Außerdem ist erfindungsgemäß eine mittels eines weiteren, in der Ablaufsteuerungsumgebung ablaufenden Software-Containers gebildete Aggregator-Komponente vorgesehen, die mit der separierten Kommunikationsschnittstelle verbunden und dafür ausgestaltet und eingerichtet ist, Angaben über die mittels der Server-Komponenten bereitgestellten Dienste außerhalb der Ablaufsteuerungsumgebung verfügbar zu machen. Dabei verfügt die Aggregator-Komponente über einen virtuellen IP-Stack, der mit dem virtuellen IP-Switch verbunden ist. Darüber hinaus sind die Verzeichnisdienst-Komponenten jeweils dafür ausgestaltet und eingerichtet, untereinander bzw. mit der Aggregator-Komponente Angaben über jeweils ermittelte Dienste abzugleichen. Dementsprechend ist die Aggregator-Komponente dafür ausgestaltet und eingerichtet, die abgeglichenen Angaben außerhalb der Ablaufsteuerungsumgebung bereitzustellen.

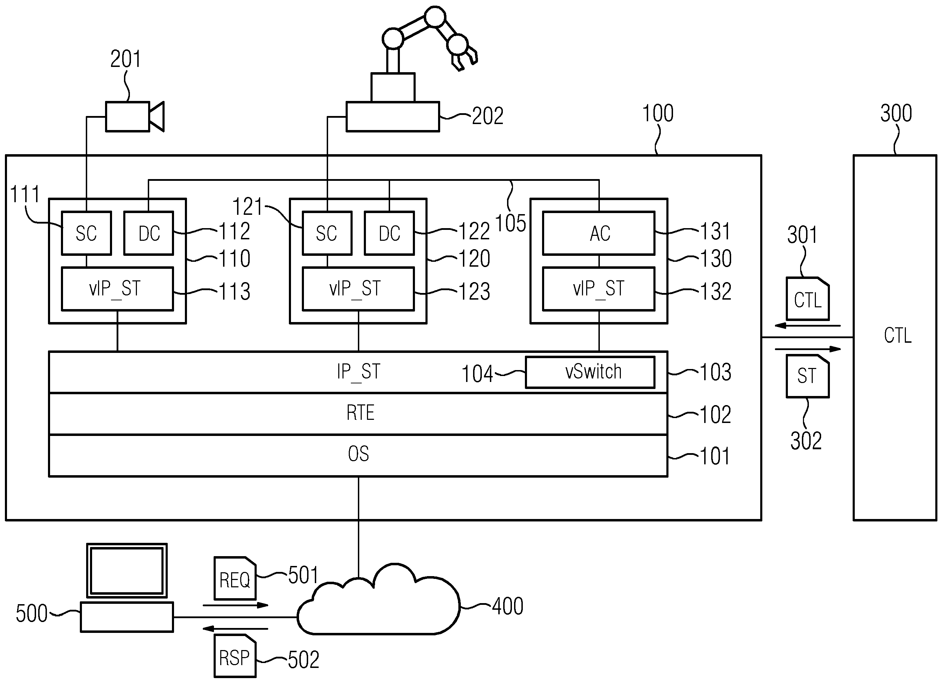

Die vorliegende Erfindung wird nachfolgend an einem Ausführungsbeispiel anhand der Zeichnung näher erläutert. Es zeigt die
- Figur: eine schematische Darstellung einer Anordnung mit einer Server-Einrichtung zur Bereitstellung von Diensten bzw. Steuerungs- und Überwachungsanwendungen eines industriellen Automatisierungssystems über ein Kommunikationsnetz an zumindest einen Benutzer eines Endgeräts.

Die in der Figur dargestellte Anordnung umfasst eine Server-Einrichtung 100 mit mehreren virtuellen Hosts 110, 120, 130 zur Bereitstellung von Diensten bzw. Steuerungs- und Überwachungsanwendungen eines industriellen Automatisierungssystems. Die Dienste bzw. Steuerungs- und Überwachungsanwendungen des industriellen Automatisierungssystems sind exemplarisch für zeitkritische Dienste. Im vorliegenden Ausführungsbeispiel werden die Dienste bzw. Steuerungs- und Überwachungsanwendungen auf Grundlage von OPC UA bereitgestellt. Somit umfassen die Dienste bzw. Steuerungs- und Überwachungsanwendungen Schnittstellendefinitionen, die für einen dauerhaften Zugriff auf die Dienste bzw. Steuerungs- und Überwachungsanwendungen genutzt werden können.

Die Dienste können jeweils mehrere gleichartige oder identische Steuerungs- und Überwachungsanwendungen umfassen, die jeweils durch unterschiedliche Server-Einrichtungen bzw. virtuelle Hosts bereitgestellt werden. Eine Bereitstellung mehrerer gleichartiger Steuerungsanwendungen auf unterschiedlichen Server-Einrichtungen bzw. mittels unterschiedlicher virtueller Hosts gleichzeitig kann beispielsweise mittels Kubernetes-Daemon Sets durch eine Überwachungseinrichtung 200 gesteuert werden, die den Server-Einrichtungen bzw. virtuellen Hosts administrativ zugeordnet ist.

Außerdem umfasst die in der Figur dargestellte Anordnung zumindest ein Endgerät 500, das zumindest einem Benutzer zugeordnet ist, der im vorliegenden Ausführungsbeispiel Anfragen 501 entsprechend OPC UA zur Nutzung der Dienste über ein Kommunikationsnetz 400 an die Server-Einrichtung 100 sendet und von dieser dementsprechend Antworten 502 bzw. Messwerte und Statusmeldungen empfängt. Das Kommunikationsnetz 400 ist vorzugsweise als Time-Sensitive Network ausgestaltet, insbesondere entsprechend IEEE 802.1Q, IEEE 802.1AB, IEEE 802.1AS, IEEE 802.1BA bzw. IEEE 802.1CB.

Die virtuellen Hosts 110, 120 implementieren vorzugsweise Funktionen von Steuerungsgeräten eines industriellen Automatisierungssystems, wie speicherprogrammierbaren Steuerungen, oder von Feldgeräten, wie Sensoren oder Aktoren. Im vorliegenden Ausführungsbeispiel dienen die virtuellen Hosts 110, 120 einem Austausch von Steuerungs- und Messgrößen mit durch die Server-Einrichtung 100 bzw. die virtuellen Hosts 110, 120 gesteuerten Maschinen oder Vorrichtungen 301-302. Insbesondere sind die virtuellen Hosts 110, 120 für eine Ermittlung geeigneter Steuerungsgrößen aus erfassten Messgrößen vorgesehen.

Das Endgerät 500 ist im vorliegenden Ausführungsbeispiel eine Bedien- und Beobachtungsstation und dient zur Visualisierung von Prozessdaten bzw. Mess- und Steuerungsgrößen, die durch die Server-Einrichtung 100 bzw. die virtuellen Hosts 110, 120 oder andere Automatisierungsgeräte verarbeitet bzw. erfasst werden. Insbesondere wird das Endgerät 500 zur Anzeige von Werten eines Regelungskreises und zur Veränderung von Regelungsparametern oder -programmen verwendet.

Die Dienste umfassen jeweils zumindest eine Server-Komponente 111, 121, die durch einen Software-Container gebildet wird, der von anderen Software-Containern oder Container-Gruppen isoliert innerhalb einer Ablaufsteuerungsumgebung 102 auf einem Host-Betriebssystem 101 der Server-Einrichtung 100 abläuft. Allgemein nutzen Software-Container jeweils gemeinsam mit anderen auf der jeweiligen Server-Einrichtung ablaufenden Software-Containern einen Kernel des Host-Betriebssystems der Server-Einrichtung.

Die Ablaufsteuerungsumgebung 102 umfasst einen virtuellen Switch 104. Für die Server-Komponenten 111, 121 wird demgegenüber jeweils ein virtueller IP-Stack 113, 123 verfügbar gemacht, der mit dem virtuellen Switch 104 verbunden ist und zur Verarbeitung eines Kommunikationsprotokollstapels vorgesehen ist. Im vorliegenden Ausführungsbeispiel wird der virtuelle Switch 104 mittels eines der Ablaufsteuerungsumgebung 102 zugeordneten IP-Stacks 103 gebildet, der zur Verarbeitung eines Kommunikationsprotokollstapels vorgesehen ist.

Die Ablaufsteuerungsumgebung 102 wird mittels der Server-Einrichtung 100 bereitgestellt und ist dort auf als Anwendung auf dem Host-Betriebssystem 101 der Server-Einrichtung 100 installiert. Darüber hinaus können Software-Container jeweils von der Server-Einrichtung 100 auf eine andere Server-Einrichtung zur dortigen Ausführung migriert bzw. auf anderen Server-Einrichtungen zeitgleich ausgeführt werden.

Eine Isolation der Software-Container und der virtuellen Hosts 110, 120, 130 bzw. eine Isolation von ausgewählten Betriebssystemmitteln untereinander kann insbesondere mittels Control Groups und Namespacing realisiert werden. Mittels Control Groups lassen sich Prozessgruppen definieren, um verfügbare Ressourcen für ausgewählte Gruppen zu beschränken. Über Namespaces können einzelne Prozesse oder Control Groups gegenüber anderen Prozessen oder Control Groups isoliert bzw. verborgen werden. Speicherabbilder für Software-Container können beispielsweise aus einem durch eine Vielzahl von Nutzern lesend bzw. schreibend zugreifbaren Speicher- und Bereitstellungssystem abgerufen werden.

Zur Ermittlung innerhalb der Ablaufsteuerungsumgebung 102 bereitgestellter Dienste umfassen die Dienste zusätzlich jeweils eine mittels eines separaten Software-Containers gebildete Verzeichnisdienst-Komponente 112, 122. Die Verzeichnisdienst-Komponenten 112, 122 sind miteinander über eine Kommunikationsschnittstelle 105 verbunden, die vom virtuellen Switch 104 und den virtuellen IP-Stacks 113, 123 der Server-Komponenten 111, 121 separiert ist und einen Seitenkanal zu einer Kommunikation der Server-Komponenten 111, 121 mit der Ablaufsteuerungsumgebung 102 bildet.

Mit der separierten Kommunikationsschnittstelle 105 ist außerdem eine Aggregator-Komponente 131 verbunden, die mittels eines weiteren Software-Containers gebildet wird und die Angaben über die mittels der Server-Komponenten 111, 121 bereitgestellten Dienste außerhalb der Ablaufsteuerungsumgebung 102 bzw. außerhalb der Server-Einrichtung 100 verfügbar macht. Die Verzeichnisdienst-Komponenten 112, 122 gleichen untereinander bzw. mit der Aggregator-Komponente 131 Angaben über jeweils ermittelte Dienste ab. Die Aggregator-Komponente 131 stellt die abgeglichenen Angaben außerhalb der Ablaufsteuerungsumgebung 102 bzw. außerhalb der Server-Einrichtung 100 bereit. Diese abgeglichenen Angaben können insbesondere durch den Benutzer des Endgeräts 500 abgerufen werden.

Für die Aggregator-Komponente 131 wird ein virtueller IP-Stack 132 verfügbar gemacht, die mit dem virtuellen Switch 104 verbunden ist. Im vorliegenden Ausführungsbeispiel umfasst der virtuelle Host 130 sowohl die Aggregator-Komponente 131 als auch deren virtuellen IP-Stack 132. Insbesondere wird der virtuelle Host 130 mittels des Software-Containers für die Aggregator-Komponente 131 gebildet, wenn dieser Software-Container in die Ablaufsteuerungsumgebung 102 geladen und dort ausgeführt wird.

Die Verzeichnisdienst-Komponenten 112, 122 werden jeweils erzeugt, wenn für den jeweiligen Dienst erstmals eine Server-Komponente 111, 121 gestartet wird. Im vorliegenden Ausführungsbeispiel werden die virtuellen Hosts 110, 120 mittels der Software-Container für die Server-Komponenten 111, 121 einschließlich ihrer virtuellen IP-Stacks 113, 123 sowie mittels der Software-Container für die Verzeichnisdienst-Komponenten 112, 122 gebildet, wenn diese in die Ablaufsteuerungsumgebung 102 geladen und dort ausgeführt werden.

Die Verzeichnisdienst-Komponenten 112, 122 werden vorzugsweise jeweils mittels einer bidirektionalen Kommunikationsverbindung für eine Inter-Prozess-Kommunikation innerhalb der Server-Einrichtung 100 oder mittels einer separaten Transportschicht-Verbindung miteinander bzw. mit einem der Aggregator-Komponente 131 zugeordneten Verzeichnisdienst-Client verbunden. Auf dieser Grundlage können die Verzeichnisdienst-Komponenten 112, 122 untereinander bzw. mit dem Verzeichnisdienst-Client Angaben jeweils ermittelte Dienste abgleichen. Insbesondere sind die bidirektionalen Kommunikationsverbindungen für die Inter-Prozess-Kommunikation bzw. die Transportschicht-Verbindungen durch die vom virtuellen Switch 104 und den virtuellen IP-Stacks 113, 123 der Server-Komponenten 111, 121 separierte Kommunikationsschnittstelle 105 umfasst.

Außerdem umfasst die in der Figur dargestellte Anordnung eine der Server-Einrichtung 100 beispielsweise innerhalb des Rechner-Clusters zugeordnete Überwachungseinrichtung 300. Die Überwachungseinrichtung 300 erfasst mittels entsprechender Überwachungsaufträge 301 ein Anlegen, ein Löschen bzw. eine Änderung der Software-Container bzw. von die Software-Container umfassenden Kubernetes-Pods und registriert die Dienste bzw. Steuerungs- und Überwachungsanwendungen mit ihrem jeweils zurückgemeldeten Ausführungsstatus 302. Vorzugsweise ist die Überwachungseinrichtung 300 als Kubernetes-API-Server ausgestaltet. Im vorliegenden Ausführungsbeispiel umfasst das Anlegen, das Löschen bzw. die Änderung der Software-Container bzw. Pods insbesondere jeweils ein Allokieren oder Freigeben von Ressourcen in der jeweiligen Server-Einrichtung.

## Patentansprüche

1. Verfahren zur Bereitstellung von zeitkritischen Diensten, bei dem
- die Dienste jeweils zumindest eine Server-Komponente (111, 121) umfassen, die durch einen Software-Container gebildet wird, der von anderen Software-Containern oder Container-Gruppen isoliert innerhalb einer Ablaufsteuerungsumgebung (102) auf einem Host-Betriebssystem (101) einer Server-Einrichtung abläuft (100), wobei die Ablaufsteuerungsumgebung einen virtuellen Switch (104) umfasst und die Software-Container jeweils gemeinsam mit anderen auf der jeweiligen Server-Einrichtung ablaufenden Software-Containern einen Kernel des Host-Betriebssystems der Server-Einrichtung nutzen,
- für die Server-Komponenten jeweils ein virtueller IP-Stack (113, 123) verfügbar gemacht wird, der mit dem virtuellen Switch (104) verbunden ist,
- die Dienste zusätzlich jeweils eine mittels eines separaten, in der Ablaufsteuerungsumgebung (102) ablaufenden Software-Containers gebildete Verzeichnisdienst-Komponente (112, 122) zur Ermittlung innerhalb der Ablaufsteuerungsumgebung bereitgestellter Dienste umfassen, wobei die Verzeichnisdienst-Komponenten miteinander über eine Kommunikationsschnittstelle (105) verbunden werden, die von dem virtuellen Switch und den virtuellen IP-Stacks der Server-Komponenten separiert ist und einen Seitenkanal zu einer Kommunikation der Server-Komponenten mit der Ablaufsteuerungsumgebung bildet,
- mit der separierten Kommunikationsschnittstelle (105) eine mittels eines weiteren, in der Ablaufsteuerungsumgebung (102) ablaufenden Software-Containers gebildete Aggregator-Komponente (131) verbunden ist, die Angaben über die mittels der Server-Komponenten bereitgestellten Dienste außerhalb der Ablaufsteuerungsumgebung verfügbar macht,
- die Verzeichnisdienst-Komponenten untereinander und/oder mit der Aggregator-Komponente Angaben über jeweils ermittelte Dienste abgleichen,
- die Aggregator-Komponente die abgeglichenen Angaben außerhalb der Ablaufsteuerungsumgebung bereitstellt,
- für die Aggregator-Komponente (131) ein virtueller IP-Stack (132) verfügbar gemacht wird, der mit dem virtuellen IP-Switch (104) verbunden ist.

2. Verfahren nach Anspruch 1,
bei dem die Verzeichnisdienst-Komponenten (112, 122) jeweils erzeugt werden, wenn für den jeweiligen Dienst erstmals eine Server-Komponente (111, 121) gestartet wird.

3. Verfahren nach einem der Ansprüche 1 oder 2,
bei dem die Verzeichnisdienst-Komponenten jeweils mittels einer bidirektionalen Kommunikationsverbindung für eine Inter-Prozess-Kommunikation innerhalb einer Datenverarbeitungseinrichtung oder mittels einer separaten Transportschicht-Verbindung miteinander und/oder mit einem der Aggregator-Komponente zugeordneten Verzeichnisdienst-Client verbunden sind.

4. Verfahren nach Anspruch 3,
bei dem die separierte Kommunikationsschnittstelle die bidirektionalen Kommunikationsverbindungen für die Inter-Prozess-Kommunikation und/oder die Transportschicht-Verbindungen umfasst.

5. Verfahren nach einem der Ansprüche 1 bis 4,
bei dem die Ablaufsteuerungsumgebung (102) mittels einer Server-Einrichtung (100) bereitgestellt wird, bei dem die Software-Container jeweils von der Server-Einrichtung auf eine andere Server-Einrichtung zur dortigen Ausführung migrierbar und/oder auf anderen Server-Einrichtungen zeitgleich ausführbar sind.

6. Verfahren nach Anspruch 5,
bei dem eine mehreren Server-Einrichtungen zugeordnete Überwachungseinrichtung (300) ein Anlegen, ein Löschen und/oder eine Änderung der Software-Container erfasst und die Dienste mit ihrem jeweiligen Ausführungsstatus registriert und bei dem das Anlegen, das Löschen und/oder die Änderung der Software-Container jeweils ein Allokieren oder Freigeben von Ressourcen in der jeweiligen Server-Einrichtung umfasst.

7. Verfahren nach einem der Ansprüche 1 bis 6,
bei dem Speicherabbilder für die Software-Container aus einem durch eine Vielzahl von Nutzern lesend und/oder schreibend zugreifbaren Speicher- und Bereitstellungssystem abrufbar sind.

8. Verfahren nach einem der Ansprüche 1 bis 7,
bei dem mittels der Server-Komponenten Dienste und/oder Funktionen eines industriellen Automatisierungssystems bereitgestellt werden.

9. Verfahren nach Anspruch 8,
bei dem die Dienste jeweils mehrere gleichartige oder identische Server-Komponenten umfassen, die jeweils durch unterschiedliche Server-Einrichtungen bereitgestellt werden.

10. System zur Bereitstellung von zeitkritischen Diensten mit
- einer Ablaufsteuerungsumgebung (102),
- einem von der Ablaufsteuerungsumgebung umfassten virtuellen Switch (104),
- mehreren, jeweils von einem Dienst umfasste Server-Komponenten (111, 121), die jeweils durch einen Software-Container gebildet sind, der dafür ausgestaltet und eingerichtet ist, von anderen Software-Containern oder Container-Gruppen isoliert innerhalb einer Ablaufsteuerungsumgebung (102) auf einem Host-Betriebssystem (101) einer Server-Einrichtung (100) abzulaufen und gemeinsam mit anderen auf der Server-Einrichtung ablaufenden Software-Containern einen Kernel des Host-Betriebssystems zu nutzen, wobei die Server-Komponenten jeweils über einen virtuellen IP-Stack (113, 123) verfügen, der mit dem virtuellen Switch verbunden ist,
- einer Kommunikationsschnittstelle (105), die von dem virtuellen Switch und den virtuellen IP-Stacks der Server-Komponenten separiert ist und einen Seitenkanal zu einer Kommunikation der Server-Komponenten mit der Ablaufsteuerungsumgebung bildet,
- mehreren, jeweils zusätzlich von einem Dienst umfassten, mittels eines separaten, in der Ablaufsteuerungsumgebung (102) ablaufenden Software-Containers gebildeten Verzeichnisdienst-Komponenten (112, 122) zur Ermittlung innerhalb der Ablaufsteuerungsumgebung bereitgestellter Dienste, wobei die Verzeichnisdienst-Komponenten miteinander über die Kommunikationsschnittstelle (105) verbunden sind, die von dem virtuellen Switch und den virtuellen IP-Stacks der Server-Komponenten separiert ist und den Seitenkanal zu der Kommunikation der Server-Komponenten mit der Ablaufsteuerungsumgebung bildet,
- einer mittels eines weiteren, in der Ablaufsteuerungsumgebung (102) ablaufenden Software-Containers gebildeten Aggregator-Komponente (131), die mit der separierten Kommunikationsschnittstelle verbunden und dafür ausgestaltet und eingerichtet ist, Angaben über die mittels der Server-Komponenten bereitgestellten Dienste außerhalb der Ablaufsteuerungsumgebung verfügbar zu machen, wobei die die Aggregator-Komponente (131) über einen virtuellen IP-Stack (132) verfügt, der mit dem virtuellen IP-Switch (104) verbunden ist,
- wobei die Verzeichnisdienst-Komponenten jeweils dafür ausgestaltet und eingerichtet sind, untereinander und/oder mit der Aggregator-Komponente Angaben über jeweils ermittelte Dienste abzugleichen,
- wobei die Aggregator-Komponente dafür ausgestaltet und eingerichtet ist, die abgeglichenen Angaben außerhalb der Ablaufsteuerungsumgebung bereitzustellen.

## Claims

1. Method for providing time-critical services, in which method
- the services each comprise at least one server component (111, 121) that is formed by a software container that runs (100), isolated from other software containers or container groups, within a sequence control environment (102) on a host operating system (101) of a server device, wherein the sequence control environment comprises a virtual switch (104) and the software containers each use, jointly with other software containers running on the respective server device, a kernel of the host operating system of the server device,
- a virtual IP stack (113, 123) that is connected to the virtual switch (104) is made available for each of the server components,
- the services additionally each comprise a directory service component (112, 122) formed by means of a separate software container running in the sequence control environment (102) in order to ascertain services provided within the sequence control environment, wherein the directory service components are interconnected via a communication interface (105) that is separated from the virtual switch and the virtual IP stacks of the server components and forms a side channel for communication between the server components and the sequence control environment,
- an aggregator component (131) formed by means of a further software container running in the sequence control environment (102) is connected to the separated communication interface (105) and makes information regarding the services provided by means of the server components available outside the sequence control environment,
- the directory service components compare information regarding respectively ascertained services with one another and/or with the aggregator component,
- the aggregator component provides the compared information outside the sequence control environment,
- a virtual IP stack (132) that is connected to the virtual IP switch (104) is made available for the aggregator component (131) .

2. Method according to Claim 1,
in which the directory service components (112, 122) are each generated whenever a server component (111, 121) for the respective service is first started.

3. Method according to either of Claims 1 and 2,
in which the directory service components are each connected to one another and/or to a directory service client assigned to the aggregator component by means of a bidirectional communication link for interprocess communication within a data processing device or by means of a separate transport layer connection.

4. Method according to Claim 3,
in which the separated communication interface comprises the bidirectional communication links for the interprocess communication and/or the transport layer connections.

5. Method according to one of Claims 1 to 4,
in which the sequence control environment (102) is provided by means of a server device (100), in which the software containers can each be migrated from the server device to a different server device for execution there and/or can be executed simultaneously on other server devices.

6. Method according to Claim 5,
in which a monitoring device (300) assigned to multiple server devices detects a creation, a deletion and/or a modification of the software containers and registers the services with their respective execution status, and in which the creation, the deletion and/or the modification of the software containers comprise(s) an allocation or release of resources in the respective server device in each case.

7. Method according to one of Claims 1 to 6,
in which memory images for the software containers can be retrieved from a storage and provisioning system accessible for reading and/or writing by a plurality of users.

8. Method according to one of Claims 1 to 7,
in which services and/or functions of an industrial automation system are provided by means of the server components.

9. Method according to Claim 8,
in which the services each comprise multiple similar or identical server components that are each provided by different server devices.

10. System for providing time-critical services, having
- a sequence control environment (102),
- a virtual switch (104) comprised by the sequence control environment,
- multiple server components (111, 121) each comprised by a service, said server components each being formed by a software container that is designed and configured to run, isolated from other software containers or container groups, within a sequence control environment (102) on a host operating system (101) of a server device (100) and to use, jointly with other software containers running on the server device, a kernel of the host operating system, wherein the server components each have a virtual IP stack (113, 123) that is connected to the virtual switch,
- a communication interface (105) that is separated from the virtual switch and the virtual IP stacks of the server components and forms a side channel for communication between the server components and the sequence control environment,
- multiple directory service components (112, 122), each additionally comprised by a service, said directory service components each being formed by means of a separate software container running in the sequence control environment (102), in order to ascertain services provided within the sequence control environment, wherein the directory service components are interconnected via a communication interface (105) that is separated from the virtual switch and the virtual IP stacks of the server components and forms the side channel for communication between the server components and the sequence control environment,
- an aggregator component (131) formed by means of a further software container running in the sequence control environment (102), which aggregator component is connected to the separated communication interface and is designed and configured to make information regarding the services provided by means of the server components available outside the sequence control environment, wherein the aggregator component (131) has a virtual IP stack (132) that is connected to the virtual IP switch (104),
- wherein the directory service components are each designed and configured to compare information regarding respectively ascertained services with one another and/or with the aggregator component,
- wherein the aggregator component is designed and configured to provide the compared information outside the sequence control environment.

## Revendications

1. Procédé pour disposer de services critiques du point de vue du temps, dans lequel
- les services comprennent respectivement au moins un composant (111, 121) serveur, qui est formé par un conteneur logiciel lequel, isolé d'autres conteneurs logiciels ou groupes de conteneurs, se déroule (100) dans un environnement (102) de commande de déroulement sur un système (101) de fonctionnement hôte d'un dispositif serveur, dans lequel l'environnement de commande de déroulement comprend un switch (104) virtuel et les conteneurs logiciels utilisent respectivement, conjointement avec d'autres conteneurs logiciels se déroulant sur le dispositif serveur respectif, un noyau du système de fonctionnement hôte du dispositif serveur,
- on rend disponible aux composants serveurs respectivement un empilement IP (113, 123) virtuel, qui est relié au switch (104) virtuel,
- les services comprennent supplémentairement respectivement, pour la détermination de services mis à disposition dans l'environnement de commande de déroulement, un composant (112, 122) de service de répertoire formé au moyen d'un conteneur logiciel distinct se déroulant dans l'environnement (102) de commande de déroulement, dans lequel les composants de service de répertoire communiquent entre eux par une interface (105) de communication, qui est distincte du switch virtuel et des empilements IP virtuels des composants serveurs et qui forment un canal latéral donnant une communication des composants serveurs avec l'environnement de commande de déroulement,
- avec l'interface (105) de communication distincte communique un composant (131) agrégateur formé au moyen d'un autre conteneur logiciel distinct se déroulant dans l'environnement (102) de commande de déroulement, qui rend disponible, à l'extérieur de l'environnement de commande de déroulement, des indications sur les services mis à disposition au moyen des composants serveurs,
- les composants de service de répertoire égalisent entre eux et/ou avec le composant agrégateur les indications sur des services déterminés respectivement,
- le composant agrégateur met à disposition, à l'extérieur de l'environnement de commande de déroulement, les indications égalisées,
- on rend disponible au composant (131) agrégateur un empilement IP (132), qui est relié au switch IP (104) virtuel.

2. Procédé suivant la revendication 1,
dans lequel on produit respectivement les composants (112, 122) de service de répertoire lorsque, pour le service respectif, on lance pour la première fois un composant (111, 121) serveur.

3. Procédé suivant l'une des revendications 1 ou 2,
dans lequel les composants de service de répertoire communiquent chacun au moyen d'une liaison de communication bidirectionnelle pour une communication d'interprocessus au sein d'un dispositif de traitement de données ou au moyen d'une liaison distincte par couche de transport entre eux et/ou avec un client de service de répertoire associé au composant agrégateur.

4. Procédé suivant la revendication 3,
dans lequel l'interface de communication distincte comprend les liaisons de communication bidirectionnelles pour la communication interprocessus et/ou les liaisons à couche de transport.

5. Procédé suivant l'une des revendications 1 à 4,
dans lequel on met à disposition l'environnement (102) de commande de déroulement au moyen d'un dispositif (100) serveur, dans lequel les conteneurs logiciels peuvent migrer respectivement du dispositif serveur à un autre dispositif serveur pour y être réalisés et/ou peuvent être réalisés en même temps sur d'autres dispositifs serveurs.

6. Procédé suivant la revendication 5,
dans lequel un dispositif (300) de contrôle associé à plusieurs dispositifs serveurs détecte l'établissement, l'effacement et/ou la modification du conteneur logiciel et enregistre le service avec son statut de réalisation respectif et dans lequel l'établissement, l'effacement et/ou la modification du conteneur logiciel comprend respectivement une allocation ou une validation de ressources dans le dispositif serveur respectif.

7. Procédé suivant l'une des revendications 1 à 6,
dans lequel des représentations de mémoires pour les conteneurs logiciels peuvent être appelées d'un système de mise en mémoire et de mise à disposition, auquel on peut accéder par lecture et/ou écriture par une pluralité d'utilisateurs.

8. Procédé suivant l'une des revendications 1 à 7,
dans lequel on dispose, au moyen des composants serveurs, de services et/ou de fonctions d'un système d'automatisation industrielle.

9. Procédé suivant la revendication 8,
dans lequel les services comprennent respectivement plusieurs composants serveurs de même types ou identiques, qui sont mis à disposition respectivement par des dispositifs serveurs différents.

10. Serveur pour disposer de services critiques du point de vue du temps comprenant
- un environnement (102) de commande de déroulement,
- un switch (104) virtuel impliqué par l'environnement de commande de déroulement,
- plusieurs composants serveurs (111, 121) impliqués respectivement par un service, qui sont formés chacun par un conteneur logiciel, lequel est conformé et agencé pour, isolé d'autres conteneurs logiciels ou groupe de conteneurs au sein d'un environnement (102) de commande de déroulement, se dérouler sur un système (101) de fonctionnement hôte d'un dispositif (100) serveur et utiliser, conjointement avec d'autres conteneurs logiciels se déroulant sur le dispositif serveur, un noyau du système de fonctionnement hôte, dans lequel les composants serveurs disposent chacun d'un empilement IP (113, 123) virtuel, qui communique avec le switch virtuel,
- une interface (105) de communication, qui est séparée du switch virtuel et de l'empilement IP virtuel des composants serveurs et qui forme un canal latéral donnant une communication des composants serveurs avec l'environnement de commande de déroulement,
- plusieurs composants (112, 122) de service de répertoire, impliqués chacun supplémentairement par un service formé au moyen d'un conteneur logiciel distinct se déroulant dans l'environnement (102) de commande de déroulement, pour la détermination de services mis à disposition dans l'environnement de commande de déroulement, dans lequel les composants de service de répertoire communiquent entre eux par l'interface (105) de communication, qui est séparée du switch virtuel et de l'empilement IP virtuel des composants serveurs et qui forme le canal latéral donnant la communication des composants serveurs avec l'environnement de commande de déroulement,
- un composant (131) agrégateur, formé au moyen d'un autre conteneur logiciel se déroulent dans l'environnement (102) de commande de déroulement, qui communique avec l'interface de communication distincte et qui est conformé et agencé pour rendre disponible, à l'extérieur de l'environnement de commande de déroulement, des indications sur des services mis à disposition au moyen des composants serveurs, dans lequel le composant (131) agrégateur dispose d'un empilement IP (132) virtuel, qui communique avec le switch IP (104) virtuel,
- dans lequel les composants de service de répertoire sont conformés et agencés respectivement pour égaliser entre eux et/ou avec le composant agrégateur des indications sur des services déterminés respectivement,
- dans lequel le composant agrégateur est conformé et agencé pour mettre à disposition, à l'extérieur de l'environnement de commande de déroulement, les indications égalisées.
